(19) Europäisches Patentamt
European Patent Office
Office européen des brevets

(11) EP 4 563 364 A1

(12) **EUROPEAN PATENT APPLICATION**

(43) Date of publication:
04.06.2025 Bulletin 2025/23

(51) International Patent Classification (IPC):
**B41J 29/393** (2006.01) **B41J 2/165** (2006.01)
**B41J 23/00** (2006.01)

(21) Application number: 24215378.1

(22) Date of filing: 26.11.2024

(52) Cooperative Patent Classification (CPC):
**B41J 29/393; B41J 2/16508; B41J 2/16532;
B41J 2/16535**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.11.2023 JP 2023200963

(71) Applicant: **CANON KABUSHIKI KAISHA**
**Tokyo 146-8501 (JP)**

(72) Inventor: **TAMIYA, Keita**
**Tokyo, 146-8501 (JP)**

(74) Representative: **TBK**
**Bavariaring 4-6**
**80336 München (DE)**

(54) **PRINTING APPARATUS AND CONTROL METHOD**

(57) Provided is a printing apparatus (10) configured to perform printing on a print medium by using a printing unit, the printing apparatus including: a power storage unit (12) capable of storing power fed from an external power source connected via a USB cable; a measurement unit (36) capable of measuring time based on power from the power storage unit; a control unit (28) configured to execute predetermined processing based on a measurement result of the measurement unit; and a restriction unit (26) capable of restricting power fed from the power storage unit. In a period in which power feed from the external power source is stopped, the restriction unit restricts feeding of power to units other than at least the measurement unit depending on a power storage amount of the power storage unit, and the measurement unit continues the measurement.

MEASUREMENT PROCESSING

START

INITIALIZE MEASUREMENT VALUE — S602

START TIME MEASUREMENT — S604

STANDBY STATE ? — S606 — NO

YES

POWER IS FED FROM EXTERNAL POWER SOURCE ? — S608 — YES

NO

OBTAIN POWER STORAGE AMOUNT OF EDLC — S610

POWER STORAGE AMOUNT $\geq$ Tm ? — S612 — YES

NO

STOP VSYS_SW — S614

MEASUREMENT VALUE IS INITIALIZED ? — S616 — NO

YES

END

**FIG.6**

EP 4 563 364 A1

**Description**

BACKGROUND OF THE INVENTION

Field of the Invention

The present invention relates to a printing apparatus, a control method, and a program.

Description of the Related Art

Japanese Patent Laid-Open No. 2017-205945 discloses an inkjet printing apparatus that operates by using power from an external power source connected via a USB cable or the like and that can charge an auxiliary power source by using the external power source and use also power of the auxiliary power source in an operation.

In the printing apparatus as described above, capping is performed in a print head in which nozzles for ejecting inks are formed. In the capping, a surface on which the nozzles are formed is covered with a cap and is protected to suppress drying of the inks in the nozzles. Note that the drying of the inks in the nozzles gradually progresses also in a capped state, and there is a possibility of a decrease in an ink ejection performance in the nozzles. Accordingly, in the printing apparatus as described above, a maintenance operation for maintaining and recovering the ink ejection performance in the nozzles to a preferable state is executed in a case where a certain time elapses.

The printing apparatus is thus provided with a timer for measuring an elapsed time from completion of the latest maintenance operation. Power from the external power source is used as power for driving the timer. Moreover, a battery dedicated to the timer is provided to feed power to the timer also in the case where the USB cable is pulled out and power feed from the external power source is stopped. This increases the production cost of the printing apparatus.

SUMMARY OF THE INVENTION

The present invention has been made in view of the above problems, and provides a technique that can achieve power feed to a timer after stop of power feed from an external power source while suppressing a cost increase.

The present invention in its first aspect provides a printing apparatus as specified in claims 1 to 14.

The present invention in its second aspect provides a control method as specified in claim 15.

The present invention in its third aspect provides a program as specified in claim 16.

According to the present invention, it is possible to achieve power feed to a timer after stop of power feed from an external power source while suppressing a cost increase.

Further features of the present invention will become apparent from the following description of exemplary embodiments with reference to the attached drawings.

BRIEF DESCRIPTION OF THE DRAWINGS

Fig. 1 is a block diagram illustrating a configuration of a power feed system of a printing apparatus;
Fig. 2 is a block diagram illustrating a functional configuration of a timer;
Fig. 3 is a schematic configuration diagram of a printing mechanism in the printing apparatus;
Figs. 4A to 4E are diagrams illustrating states of power feed to configurations of the power feed system in multiple states;
Fig. 5 is a diagram illustrating a change in a power storage amount of an EDLC depending on elapse of time;
Fig. 6 is a flowchart illustrating processing contents of measurement processing;
Fig. 7 is a flowchart illustrating processing contents of determination processing;
Fig. 8 is a diagram illustrating contents of setting that can be executed by a user; and
Fig. 9 is a diagram illustrating a change in the power storage amount of the EDLC depending on an elapsed time in each setting.

DESCRIPTION OF THE EMBODIMENTS

Examples of embodiments of a printing apparatus, a control method, and a program are explained below with reference to the attached drawings. Note that the following embodiments do not limit the present invention, and not all of combinations of features explained in the present embodiments are necessarily essential for solving means of the present invention. Moreover, positions, shapes, and the like of constituent elements described in the embodiments are merely examples, and are not intended to limit the present invention to these positions, shapes, and the like.

(First Embodiment)

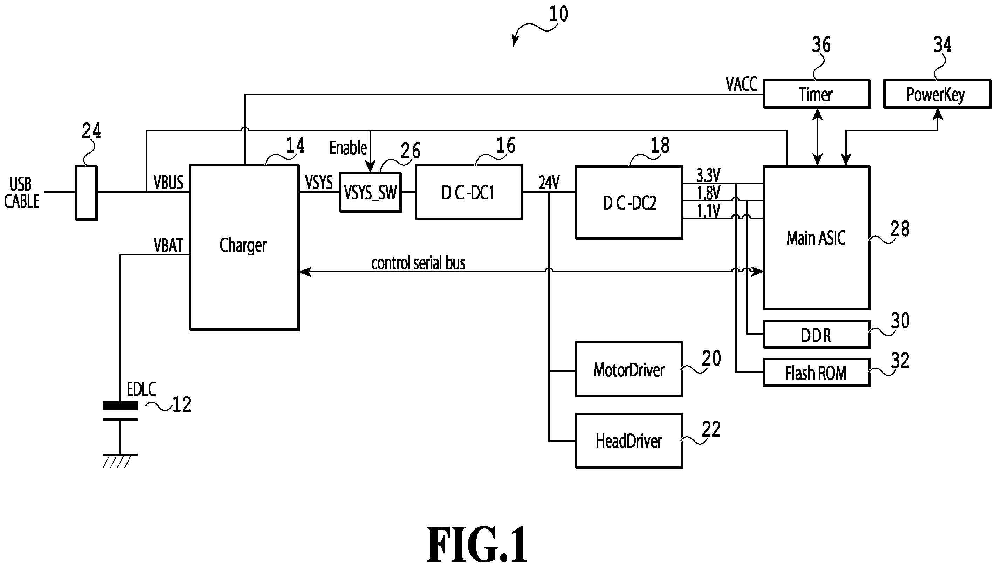

First, a printing apparatus according to a first embodiment is explained with reference to Figs. 1 to 7. The printing apparatus according to the present embodiment includes a universal serial bus (USB) connector to and from which a USB cable can be plugged in and pulled out, and is configured to be connectable to various devices. Plugging the USB cable connected to an external apparatus such as a PC terminal, a mobile terminal, a mobile battery, or an external power source adaptor into the USB connector connects the external apparatus and the printing apparatus to each other. Moreover, the printing apparatus is configured to be operable by using power fed from the external apparatus connected to the USB cable as described above. In the present specification, the external apparatus that feeds power to the printing apparatus via the USB cable is referred to as external power source. As described above, in the present embodiment, the USB connector functions as a connection portion connectable to the external power source via the USB cable.

<Configuration of Power Feed System of Printing Apparatus>

Fig. 1 is a block diagram illustrating a configuration of a power feed system of the printing apparatus according to the present embodiment. The printing apparatus 10 according to the present embodiment includes an electric double-layer capacitor (EDLC) 12 capable of being charged and feeding power and a charger 14 configured to perform control of fed power. Moreover, the printing apparatus 10 includes a DC-DC (boost) 16 that is a booster circuit configured to boost a power source voltage fed from the charger 14 and a DC-DC (buck) 18 that is a buck circuit configured to buck a voltage outputted from the DC-DC1 16. Furthermore, the printing apparatus 10 includes a motor driver 20 configured to drive various motors for operating various configurations of a printing mechanism (to be described later) and a head driver 22 configured to drive a printing head 304 (to be described later). Moreover, the printing apparatus 10 includes a power key 34 provided in an operation portion (not illustrated) that can be operated by a user and a timer 36 configured to measure time. Note that, in the printing apparatus 10, the operation portion including the power key 34 may include portions such as a display portion (not illustrated) capable of displaying various types of information, a speaker (not illustrated) capable of outputting voice guidance, a warning tone, or the like.

In the printing apparatus 10, a power source voltage VBUS fed from the external power source via a USB connector 24 to which the USB cable is connected and a power source voltage VBAT fed from the EDLC 12 being an auxiliary power source are fed to the charger 14. In the charger 14, a power source voltage VSYS and a power source voltage VACC are generated from the power source voltages VBUS and VBAT, and are outputted. The charger 14 is a unit having a function of executing power source control, EDLC discharge control, charge control, remaining power amount management, and abnormal operation protection. Moreover, the charger 14 is connected to a main ASIC 28 via a control serial bus.

The printing apparatus 10 is configured to be capable of being driven by the power source voltage VSYS generated in the charger 14, and the charger 14 performs the power source control of the printing apparatus 10. The power source voltage VSYS outputted from the charger 14 is fed to the DC-DC1 16 via a VSYS_SW 26. The VSYS_SW 26 can be controlled by the main ASIC 28 to be described later, and controls feeding of the power source voltage VSYS to the DC-DC1 16.

The power source voltage VSYS outputted from the VSYS_SW 26 is boosted to a predetermined voltage value (24 V in the present embodiment) in the DC-DC1 16, is fed from the DC-DC1 16 to the motor driver 20, and is used to drive various motors. Moreover, the boosted power source voltage VSYS is fed from the DC-DC1 16 to the head driver 22, and is used to drive the printing head 304. Furthermore, the boosted power source voltage VSYS is fed from the DC-DC1 16 to the DC-DC2 18, and is bucked to multiple voltage values in the DC-DC2 18. In the present embodiment, voltages of 3.3 V, 1.8 V, and 1.1 V are generated in the DC-DC2 18, and are fed to corresponding configurations, specifically, the main ASIC 28, a DDR memory 30, and a flash ROM 32, respectively.

The main ASIC 28 controls operations of the entire printing apparatus. The main ASIC 28 is activated by receiving power feed, and starts operating based on a program stored in the flash ROM 32. The main ASIC 28 that has started operating can receive inputs from the power key 34 and the operation portion (not illustrated), and can execute various operations in the printing apparatus 10 based on operations from the user. As described above, in the present embodiment, the main ASIC 28 functions as a control portion configured to control the printing apparatus.

The main ASIC 28 can obtain remaining power amount information on a power amount stored in the EDLC 12 (specifically, a power storage amount, and is also referred to as "remaining power amount" hereinafter) via the charger 14. Moreover, the main ASIC 28 is connected to the timer 36, and can obtain time measured by the timer 36. Furthermore, the main ASIC 28 outputs control commands to the timer 36, and controls various operations such as start and stop of the operations and initialization (reset) of the measurement value by using the outputted control commands. The timer 36 is connected to the charger 14, and the power source voltage VACC is directly fed from the charger 14. As described above, in the present embodiment, the timer 36 functions as a measurement portion that measures time.

The EDLC 12 is a secondary battery, and performs discharge depending on a load of the printing apparatus 10, in response to an instruction of the charger 14. For example, in a printing operation of the printing apparatus 10, in the case where the charger 14 determines that the power source voltage VBUS from the USB connector 24 is insufficient and the printing operation cannot be executed, the printing operation is executed by using the power source voltage VBAT of the EDLC 12. The charge control is executed based on an instruction outputted from the main ASIC 28 to the charger 14 via the control serial bus. In the present embodiment, the EDLC 12 functions as a power storage portion that can store power fed from the external power source and that can feed the stored power.

<Functional Configuration of Timer>

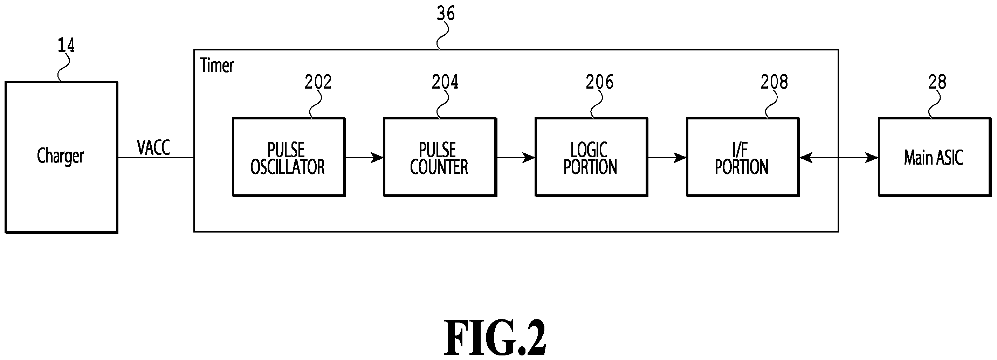

Next, a functional configuration of the timer 36 is explained. Fig. 2 is a block diagram illustrating a functional configuration of the timer 36.

The timer 36 operates by receiving the power source voltage VACC from the charger 14. The timer 36 includes a pulse oscillator 202 configured to regularly output a pulse and a pulse counter 204 configured to count the number of pulses outputted from the pulse oscillator 202. Moreover, the timer 36 includes a logic portion 206 configured to calculate elapsed time based on the count value in the pulse counter 204 and an I/F portion 208 capable of outputting a calculation result in the logic portion 206 to the main ASIC 28.

The logic portion 206 may have a form that counts time and date as time or a form that counts the pulse count value itself as time, and may have any form as long as the logic portion 206 can measure time. Moreover, the I/F portion 208 receives control commands outputted from the main ASIC 28. In the timer 36, control of an oscillation state of the pulse oscillator 202 to control start and stop of the operation of the timer 36 and resetting of the count value of the pulse counter 204 are performed based on these control commands. Note that, in the present embodiment, in the case where the count value of the pulse counter 204 is reset, the measurement value of the logic portion 206 is also reset. In the state where the power source voltage VACC is fed from the charger 14, the timer 36 continues operating after reception of the control command of operation start, until the timer 36 receives the control command of operation stop.

<Configurations Relating to Printing Mechanism of Printing Apparatus>

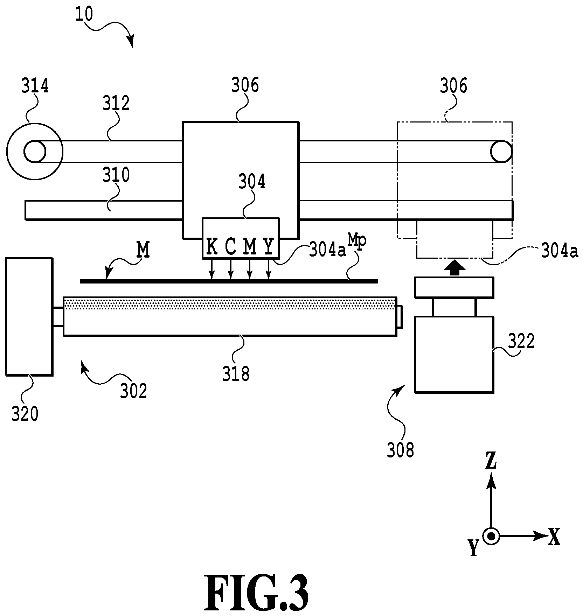

Next, configurations relating to the printing mechanism in the printing apparatus 10 are explained. Fig. 3 is a schematic configuration diagram of the printing mechanism in the printing apparatus 10.

The printing apparatus 10 includes a conveyance portion 302 configured to convey a print medium M in a Y direction and the printing head 304 configured to perform printing on the print medium M conveyed by the conveyance portion 302 by ejecting inks to the print medium M. Moreover, the printing apparatus 10 includes a carriage 306 in which the printing head 304 is mounted and that can move in a direction (X direction) intersecting (orthogonal to in the present embodiment) the conveyance direction (Y direction) of the print medium M conveyed by the conveyance portion 302. Furthermore, the printing apparatus 10 includes a maintenance portion 308 capable of executing a maintenance operation for maintaining and recovering an ink ejection performance at nozzles configured to eject the inks in the printing head 304 to a preferable state.

The printing head 304 is configured to be capable of ejecting multiple types of inks different from one another. Multiple nozzles that eject each ink are arranged side by side in a direction intersecting the X direction to form a nozzle array. In the present embodiment, the printing head 304 is configured to be capable of ejecting four types of inks of a black (K) ink, a cyan (C) ink, a magenta (M) ink, and a yellow (Y) ink. Note that the number and types of inks ejected from the printing head 304 are not limited to those described above.

The carriage 306 is provided on a guide shaft 310 extending in the X direction to be slidable, and is connected to a carriage motor 314 via a belt 312. The carriage 306 can thereby reciprocally move in the X direction by drive of the carriage motor 314. Accordingly, the printing head 304 mounted in the carriage 306 is configured to be movable via the carriage 306 from the one side toward the other side and from the other side toward the one side in the X direction. In the printing operation, applying a drive pulse to the printing head 304 while performing scanning of the carriage 306 in the X direction causes the inks to be ejected from the printing head 304 to the print medium M, and printing of one scanning operation is thereby performed on a print surface Mp of the print medium M.

The conveyance portion 302 includes a conveyance roller 318 configured to convey the print medium M and a conveyance motor 320 configured to drive the conveyance roller 318. Note that, although the conveyance roller 318 and the print medium M are illustrated to be separated from each other in a Z direction in Fig. 3 to facilitate understanding, the print medium M abuts the conveyance roller 318 in the Z direction in actual. The conveyance portion 302 drives the conveyance motor 320 to convey the print medium M in the Y direction with the conveyance roller 318.

In the printing on the print medium M based on a job, a printing operation of performing printing for one scanning operation by ejecting the inks from the printing head 304 is executed on the print medium M conveyed to a print start position by the conveyance portion 302. Thereafter, the conveyance portion 302 executes a conveyance operation of conveying the print medium M by a predetermined amount, and then the printing operation is performed again. The printing apparatus 10 performs printing on the print medium M based on the job by repeatedly and alternately executing the printing operation for one scanning operation and the conveyance operation of the predetermined amount as described above.

The maintenance portion 308 is arranged inside a movement region of the carriage 306 and outside a region of printing to the print medium M by the printing head 304 in the X direction. The maintenance portion 308 includes a cap portion 322 configured to abut (cap) the printing head 304 to protect a nozzle surface 304a of the printing head 304. Although detailed explanation and illustration are omitted, the maintenance portion 308 includes various publicly-known maintenance members such as, for example, a suction portion configured to set an inside of the cap portion 322 to a negative pressure and a wiper portion configured to wipe the nozzle surface 304a. The nozzle surface 304a is a surface of the printing head 304 that faces the print surface Mp of the conveyed print medium M, and is a surface on which the nozzles for ejecting the inks are formed.

In the capping by the cap portion 322, the printing head 304 is moved to a position (standby position to be described later) where the nozzle surface 304a faces the cap portion 322 of the maintenance portion 308 (see the broken line portion in Fig. 3), and then the cap portion 322 is lifted. In the present embodiment, the printing head 304 stands by at the standby position where the nozzle surface 304a faces the cap portion 322 at timings such as a timing at which the printing operation is not performed. Performing the capping after completion of the printing based on the job can protect the nozzle surface 304a and suppress evaporation of liquid components of the inks from the nozzles and thickening of the inks in the nozzles due to the evaporation.

Note that, even if such capping is performed, the evaporation of the liquid components of the inks from the nozzles and the like progress in the case where a long period elapses in a capped state, and the ejection performance of the inks from the nozzles decreases. Moreover, environment temperature, heat generation in the constituent members of the printing apparatus 10, and the like cause the evaporation to progress also during the printing operation. Accordingly, in the maintenance portion 308, for example, the maintenance operation for maintaining and recovering the ejection characteristic to a preferable state is executed at predetermined timings such as, for example, in a preparation operation after job input and in initialization processing of a predetermined constituent member such as initialization processing of initializing an origin position of the printing head 304. The maintenance operation includes various publicly-known processes such as, for example, a suction discharge process in which the suction portion is driven in the capped state to set the inside of the cap portion 322 to negative pressure and forcedly suck the inks from the nozzles and a wiping process in which the wiper portion wipes the nozzle surface 304a. Although the cap portion 322 is configured to be included in the maintenance portion 308 in the present embodiment, the present disclosure is not limited to this. The cap portion 322 may be provided separately from the maintenance portion 308 including the suction portion, the wiper portion, and the like.

<States of Configurations of Power Feed System>

In the printing apparatus 10, during the printing based on the job, the evaporation of the liquid components of the inks in the nozzles progresses in the nozzles that are not ejecting the inks, due to temperature of an environment in which the printing apparatus 10 is installed, the heat generation in the constituent members, and the like. Moreover, in the printing apparatus 10, in the case where no printing based on the job is performed, the cap portion 322 caps the printing head 304 located at the standby position. However, even in the capped state, the evaporation of the liquid components of the inks in the nozzles progresses, though at a slower degree than in the state where the printing head 304 is not capped.

Accordingly, the printing apparatus 10 is configured to execute the maintenance operation at the predetermined timing such as at a moment of the initialization processing on the constituent member of the printing mechanism, in the case where an elapsed time from the latest maintenance operation reaches or exceeds a predetermined time Tp. Note that the printing apparatus 10 obtains the elapsed time from the latest maintenance operation by using the timer 36. The timer 36 is driven by the power source voltage VACC outputted from the charger 14.

As described above, the power source voltage VBUS is fed to the charger 14 from the external power source connected to the printing apparatus 10 by the USB cable, and in cases such as the case where the USB cable is pulled out, the power source voltage VBAT is fed to the charger 14 from the EDLC 12 that is the auxiliary power source. Accordingly, in the case where the USB cable is pulled out and the power storage amount of the EDLC 12 reaches or falls below a certain amount, there is a possibility that the timer 36 cannot measure time due to stop of power feed from the charger 14 and the maintenance operation cannot be executed at an appropriate timing.

Accordingly, in the present embodiment, power feed to some of the constituent members of the power feed system is restricted depending on power ON or OFF of the printing apparatus 10, connection or disconnection of the USB cable, and the power storage amount of the EDLC 12 to allow the timer 36 to measure a time equal to or longer than the predetermined time Tp. Note that the predetermined time Tp is, for example, a time from the latest maintenance operation to execution of the next maintenance operation, and is determined through experiments depending on the types of inks and the like.

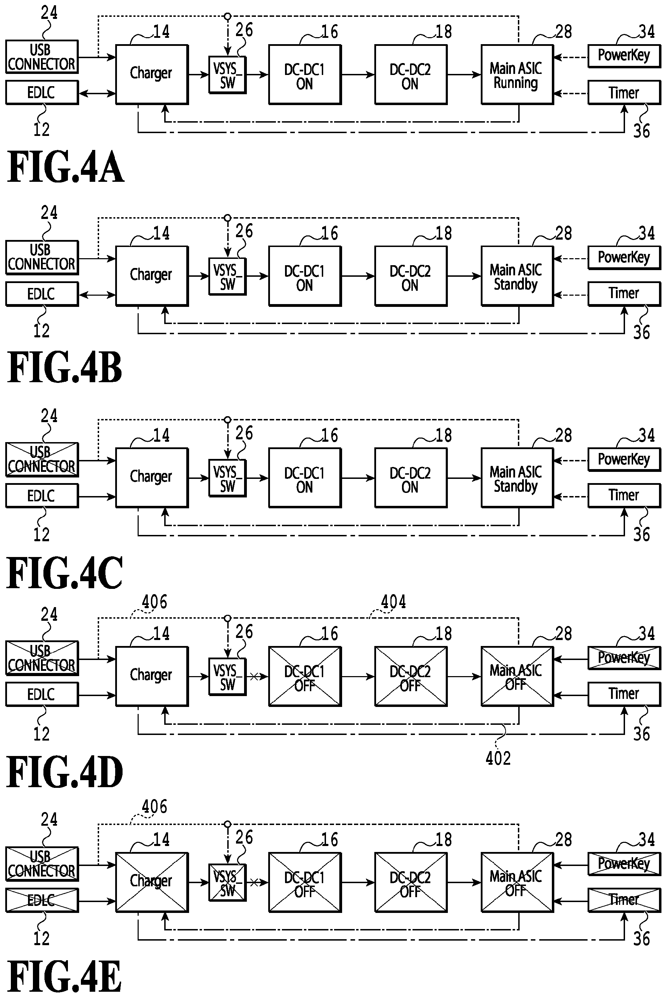

Explanation is given below of power feed to each of the constituent members of the power feed system depending on the power ON or OFF of the printing apparatus 10, the connection or disconnection of the USB cable (that is presence or absence of power feed from the external power source), and the power storage amount of the EDLC 12. Figs. 4A to 4E are diagrams illustrating states of power feed to each of the constituent members of the power feed system depending on the power ON or OFF of the printing apparatus 10, the connection or disconnection of the USB cable, and the power storage amount of the EDLC 12. Note that, in Figs. 4A to 4E, blocks representing the respective configurations are illustrated as open blocks in the case where the configurations are in a state where power is fed or in a state where power can be fed (ON state), and are illustrated with crosses in the blocks in the case where the configurations are in a state where no power is fed or a state where power cannot be fed (OFF state).

=First State=

In a first state in which the power of the printing apparatus 10 is ON and the USB cable is connected, as illustrated Fig. 4A, power is fed from the external power source via the USB connector 24. The charger 14 thereby charges the EDLC 12, and also feeds power to the VSYS_SW 26 by receiving power feed also from the EDLC 12 in the case where a power load increases due to the printing operation or the like. Accordingly, the constituent members of the power feed system are fed with power, and are in the ON state. Moreover, since the power of the printing apparatus 10 is ON, the main ASIC 28 is in a running state, and can execute various operations such as the printing operation.

In the first state, the timer 36 is fed with power from the charger 14 and can measure time, and the main ASIC 28 can obtain the measurement value in the timer 36. Moreover, in the first state, since power is fed to the main ASIC 28, the user can perform an operation of turning OFF the power of the printing apparatus 10 through the power key 34 connected to the main ASIC 28. Note that, in the case where the power of the printing apparatus 10 is ON and the USB cable is disconnected, for example, connection to the external power source with the USB cable is prompted in the operation portion or the like, and the printing apparatus 10 is connected to the external power source. Accordingly, the same state as Fig. 4A is achieved.

=Second State=

In a second state in which the power of the printing apparatus 10 is OFF and the USB cable is connected, as illustrated in Fig. 4B, power is fed from the external power source via the USB connector 24. The charger 14 feeds power to the VSYS_SW 26 by receiving power feed from the external power source. Accordingly, the constituent members of the power feed system are fed with power, and are in the ON state. Moreover, since the power of the printing apparatus 10 is OFF, the main ASIC 28 is in a standby state, and is in a waiting state in which the operations are limited. Accordingly, in the second state, power consumption is lower than that in the first state. The timer 36 is fed with power from the charger 14 and can measure time, and the main ASIC 28 can obtain the measurement value in the timer 36. In the second state, since power is fed to the main ASIC 28, the user can perform an operation of turning ON the power of the printing apparatus 10 through the power key 34.

=Third State=

In a third state in which: the power of the printing apparatus 10 is OFF; the USB cable is disconnected; and the power storage amount of the EDLC 12 is equal to or more than a predetermined amount Tm, as illustrated in Fig. 4C, power stored in the EDLC 12 that is the auxiliary power source is consumed. In the third state, since the power storage amount of the EDLC 12 is equal to or more than the predetermined amount Tm (to be described later), the charger 14 receives power feed from the EDLC 12, and feeds power to the VSYS_SW 26. Accordingly, the constituent members of the power feed system are fed with power and are in the ON state. Since the power of the printing apparatus 10 is OFF, the main ASIC 28 is in the standby state, and is in the waiting state in which the operations are limited.

In the third state, the timer 36 is fed with power from the charger 14 and can measure time, and the main ASIC 28 can obtain the measurement value in the timer 36. Moreover, in the third state, since power is fed to the main ASIC 28, the user can perform an operation of turning ON the power of the printing apparatus 10 through the power key 34. The main ASIC 28 detects the remaining power amount information on the remaining power amount (power storage amount) of the EDLC 12 via the charger 14. The printing apparatus 10 transitions to a fourth state in the case where the power storage amount of the EDLC 12, that is the remaining power amount in the EDLC 12 decreases and falls below the predetermined amount Tm.

=Fourth State=

In the fourth state in which: the power of the printing apparatus 10 is OFF; the USB cable is disconnected; and the power storage amount of the EDLC 12 is "0" (or an amount corresponding to "0") or more and less than the predetermined amount Tm, as illustrated in Fig. 4D, power stored in the EDLC 12 is consumed. Note that "0" or the amount corresponding to "0" is a lower limit value at which the constituent members of the power feed system can operate. In the fourth state, since the power storage amount of the EDLC 12 has decreased and fallen below the predetermined amount Tm, power feed to the constituent members other than the timer 36 is restricted to prioritize power feed to the timer 36, and the power feed is devoted to the timer 36.

Specifically, the main ASIC 28 detects the remaining power amount information of the EDLC 12 via a communication line 402. In the case where the main ASIC 28 determines that the power storage amount of the EDLC 12 is less than the predetermined amount Tm, the main ASIC 28 causes the VSYS_SW 26 to stop power feed, via a control line 404. This control from the main ASIC 28 causes the VSYS_SW 26 to restrict feeding of power fed from the charger 14 to the DC-DC1 16. Power feed to the DC-DC2 18 and the main ASIC 28 is thereby stopped, and the DC-DC1 16, the DC-DC2 18, and the main ASIC 28 go into the OFF state in which no power is fed. As described above, in the present embodiment, the VSYS_SW 26 functions as a restriction portion capable of restricting power feed to the main ASIC 28.

In the fourth state, since the main ASIC 28 is in the OFF state and cannot operate, the main ASIC 28 cannot receive an user operation through the power key 34, and the loaded program is also in a reset state. Meanwhile, power feed from the charger 14 to the timer 36 is continued, and the timer 36 can measure time. Note that, in the fourth state, since the main ASIC 28 cannot operate, the main ASIC 28 cannot obtain the measurement value in the timer 36. As described above, in the fourth embodiment, the power feed to the DC-DC1 16, the DC-DC2 18, and the main ASIC 28 is stopped, and the power consumption in the power feed system is suppressed to secure power to be fed to the timer 36. A time in which power is fed to the timer 36 can be thereby secured to be long.

=Fifth State=

In a fifth state in which: the power of the printing apparatus 10 is OFF; the USB cable is disconnected; and the power storage amount of the EDLC 12 is "0" (or the amount corresponding to "0"), as illustrated in Fig. 4E, power feed to all constituent members of the power feed system is stopped. The decrease of the power storage amount of the EDLC 12 causes the power storage amount to fall below a power storage amount at which the charger 14 and the timer 36 can operate, and these configurations are also fed with no power and go into the OFF state. In the case where the timer 36 goes into the OFF state, the timer 36 cannot continue time measurement, the count value of the pulse counter 204 is reset, and the calculation result in the logic portion 206 is initialized (reset) based on the reset of the count value. In other words, the measurement value measured up to this point disappears.

=Transition from OFF State to ON State of Main ASIC=

Although illustration is omitted, in recovery from the fourth state and the fifth state, that is transition from the OFF state to the ON state of the main ASIC 28, the printing apparatus 10 needs to be in a state where the USB cable is connected to the USB connector 24 and power is fed from the external power source. After the connection of the USB cable to the USB connector 24, the power fed from the external power source is fed to the charger 14. The charger 14 thereby feeds power to the VSYS_SW 26 and the timer 36. Moreover, power fed from the external power source is fed to the VSYS_SW 26 via a control line 406, and the VSYS_SW 26 is thereby activated. The VSYS_SW 26 activated by the power feed from the control line 406 feeds power fed from the charger 14 to the DC-DC1 16. Specifically, the restriction of feeding of power fed from the charger 14 to the DC-DC1 16 by the VSYS_SW 26 is cancelled. Then, power is fed from the DC-DC1 16 to the main ASIC 28 via the DC-DC2 18. The DC-DC1 16, the DC-DC2 18, and the main ASIC 28 go into the ON state, and the timer 36 goes into a state where the time measurement is possible.

<Change in Power Storage Amount of EDLC>

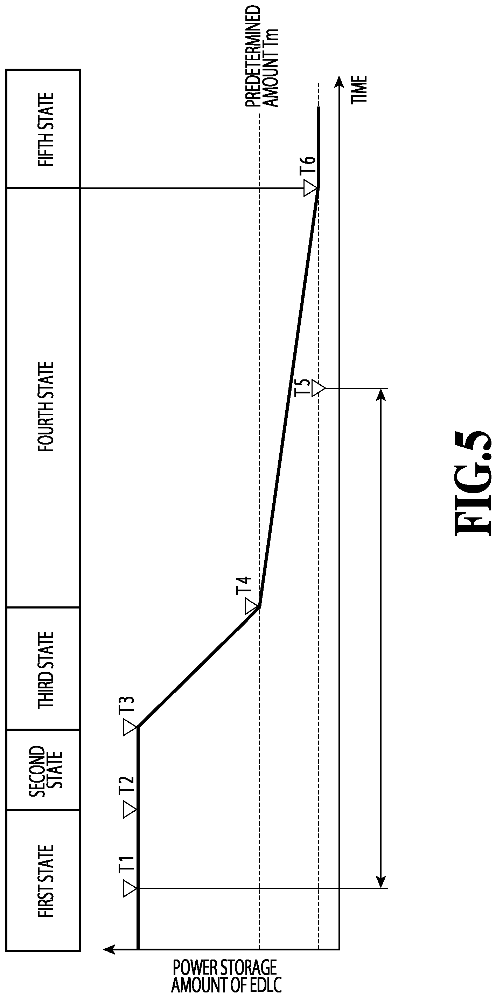

Next, explanation is given of a change in the power storage amount of the EDLC 12 over time around a moment of pulling-out of the USB cable for connection to the external power source (that is around a moment of stop of power feed from the external power source). Fig. 5 is a diagram illustrating the change in the power storage amount of the EDLC 12 over time around the moment of pulling-out of the USB cable for the connection to the external power source.

In the first state in which the power of the printing apparatus 10 is ON, the printing apparatus 10 can execute various operations including the maintenance operation by control of the main ASIC 28. Although details are described later, in the present embodiment, in the case where the maintenance operation is executed, initialization of the measurement value in the timer 36 is performed, and then the time measurement is started again. In Fig. 5, the point T1 indicates a timing at which the maintenance operation is executed.

In the case where the power of the printing apparatus 10 is turned OFF by the operation on the power key 34 from the first state, the printing apparatus 10 transitions to the second state. In Fig. 5, the point T2 indicates a timing at which the power of the printing apparatus 10 is turned OFF. Then, in the case where the USB cable is pulled out from the USB connector 24, the printing apparatus 10 transitions to the third state. Since the charging of the EDLC 12 is performed in the first state and the second state, a sufficient power equal to or larger than the predetermined amount Tm is stored in the EDLC 12 at the moment where the USB cable is pulled out. In Fig. 5, the point T3 indicates a timing at which the USB cable is pulled out. In the third state, since power is fed to the constituent members of the power feed system, the power of the EDLC 12 is consumed, and the power storage amount of the EDLC 12 decreases over time.

The main ASIC 28 monitors the power storage amount of the EDLC 12, and in the case where the power storage amount of the EDLC 12 falls below the predetermined amount Tm, the printing apparatus 10 transitions to the fourth state. In Fig. 5, the point T4 indicates a timing at which the power storage amount of the EDLC 12 reaches the predetermined amount Tm. In the fourth state, the restriction of power feed by the VSYS_SW 26 stops power feed to the DC-DC1 16, the DC-DC2 18, and the main ASIC 28, and the DC-DC1 16, the DC-DC2 18, and the main ASIC 28 are in the OFF state. Accordingly, in the fourth state, consumption of the power of the EDLC 12 is lower than that in the third state, and the power storage amount of the EDLC 12 slowly decreases.

The predetermined amount Tm that is a threshold of transition from the third state to the fourth state is set such that the timer 36 can measure time equal to or longer than the predetermined time Tp that is a time interval at which the maintenance operation is executed, from completion of the latest maintenance operation. Specifically, the predetermined amount Tm is set such that an elapsed time from the completion of the latest maintenance operation reaches the predetermined time Tp in the fourth state in which the power feed to the timer 36 is possible. For example, the predetermined amount Tm satisfies the following formula (1). Note that the symbols in the following formula (1) are such that Tm is the predetermined amount Tm, Co is power consumption of the timer 36 per unit time, Tp is predetermined time Tp, and El is elapsed time (current value) from the maintenance operation.

$$Tm \geq Co \times (Tp\text{-}El) \dots (1)$$

Setting the predetermined amount Tm as described above allows the timer 36 to measure a time longer than the predetermined time Tp that is the time interval at which the maintenance operation is executed, from the completion of the latest maintenance operation. In Fig. 5, the point T5 indicates a timing at which the predetermined time Tp elapses from the point T1 at which the latest maintenance operation is completed. Specifically, the elapsed time from the point T1 to the point T5 corresponds to the predetermined time Tp.

After the transition to the fourth state, the power storage amount of the EDLC 12 decreases over time, and in the case where the power storage amount of the EDLC 12 reaches "0" or the amount corresponding to "0", the printing apparatus 10 transitions to the fifth state. In the fifth state, the printing apparatus 10 goes into an "ALL OFF" state in which the power feed to all constituent members of the power feed system is stopped. In Fig. 5, the point T6 indicates a timing at which the power storage amount of the EDLC 12 reaches "0" or the amount corresponding to "0". In the fifth state, the drive of the timer 36 is stopped as described above, and with this stop, the count value of the pulse counter 204 is reset, and the measurement value of the logic portion 206 is initialized, that is set to "0".

In the fourth state and the fifth state, no power is fed to the main ASIC 28. Accordingly, in the fourth state and the fifth state, the power of the printing apparatus 10 cannot be turned ON by the operation on the power key 34. Connecting the USB cable to connect the printing apparatus 10 to the external power source can enable the operation on the power key 34. Accordingly, in a period after the point T4, connecting the printing apparatus 10 and the external power source to each other activates the main ASIC 28. As described later, the activated main ASIC 28 refers to the measurement result of the timer 36, and determines whether or not to cause the timer 36 to continue the time measurement, based on the measurement result.

In the present embodiment, in the fourth state, the power consumption in the power feed system is suppressed, and the drive time of the timer 36 is secured to be longer than the predetermined time Tp with the latest maintenance operation being the starting point. The predetermined time Tp from the latest maintenance operation has thus already elapsed at the stage of the transition to the fifth state. Accordingly, in the case where the measurement value of the timer 36 is reset at a time point where the USB cable is connected and the power is fed from the external power source, this means that the predetermined time Tp has elapsed from the latest maintenance operation, and there is no need to measure time.

\<Measurement Processing\>

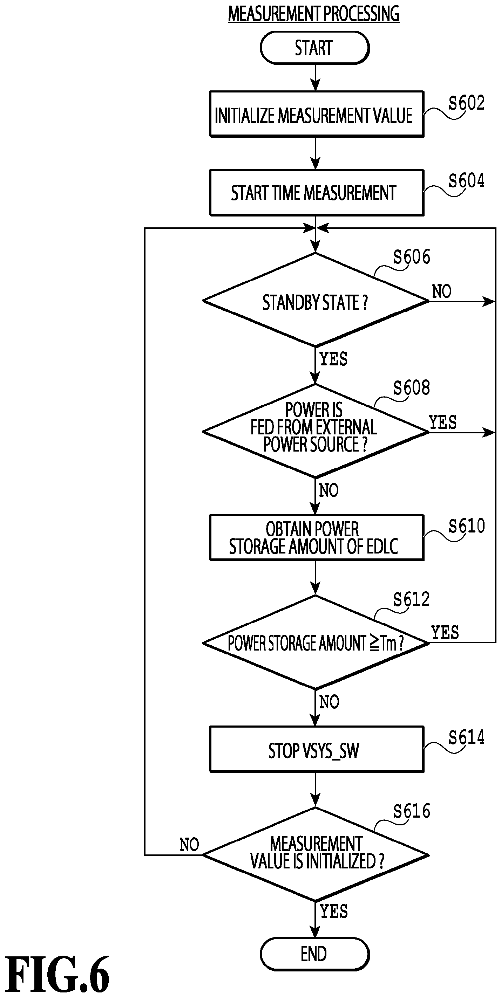

In the above configuration, in the case where the maintenance operation is completed, the printing apparatus 10 executes measurement processing of measuring the elapsed time from this maintenance operation. Fig. 6 is a flowchart illustrating detailed processing contents of the measurement processing. The main ASIC 28 performs the series of processes illustrated in the flowchart of Fig. 6 by loading a program code stored in the flash ROM 32 onto the DDR 30 and executing the program code. Alternatively, all or part of functions of the steps in Fig. 6 may be executed by hardware such as another ASIC or an electric circuit. In the present specification, sign S in explanation of each process in the flowchart means step in the flowchart.

In the case where the measurement processing is started, first, in S602, the main ASIC 28 initializes the measurement value of the timer 36. In S602, the pulse counter 204 of the timer 36 is reset, and the measurement value of the logic portion 206 is thereby initialized. Next, in S604, the main ASIC 28 causes the timer 36 to start the time measurement. Thereafter, in S606, the main ASIC 28 determines whether or not the main ASIC 28 is in the standby state.

In the case where the main ASIC 28 determines that the main ASIC 28 is not in the standby state, that is in the running state in S606, the determination of S606 is performed again. Meanwhile, in the case where the main ASIC 28 determines that the main ASIC 28 is in the standby state in S606, the processing proceeds to S608, and the main ASIC 28 determines whether power is fed from the external power source. In S608, the main ASIC 28 determines whether the power source voltage VBUS is fed to the charger 14. In this determination, in the case where the main ASIC 28 determines that the power source voltage VBUS is fed to the charger 14, the main ASIC 28 determines that power is fed from the external power source. In the case where the main ASIC 28 determines that the power source voltage VBUS is not fed to the charger 14, the main ASIC 28 determines that no power is fed from the external power source.

In the case where the main ASIC 28 determines that power is fed from the external power source in S608, the processing returns to S606. Meanwhile, in the case where the main ASIC 28 determines that no power is fed from the external power source in S608, the processing proceeds to S610, and the main ASIC 28 obtains the power storage amount of the EDLC 12 at this timing. As described above, the main ASIC 28 can obtain the remaining power amount information of the EDLC 12 via the charger 14. Accordingly, in S610, the main ASIC 28 obtains the power storage amount of the EDLC 12 based on the obtained remaining power amount information.

Next, in S612, the main ASIC 28 determines whether or not the power storage amount of the EDLC 12 is equal to or more than the predetermined amount Tm. In the case where the main ASIC 28 determines that the power storage amount of the EDLC 12 is equal to or more than the predetermined amount in S612, the processing returns to S606. Meanwhile, in the case where the main ASIC 28 determines that the power storage amount of the EDLC 12 is less than the predetermined amount Tm in S612, the processing proceeds to S614, and the main ASIC 28 stops the power feed by the VSYS_SW 26. No power is thereby fed to the main ASIC 28, and the main ASIC 28 becomes inoperable.

The processing of S614 causes the printing apparatus 10 to go into the fourth state, and the power feed to the DC-DC1 16, the DC-DC2 18, and the main ASIC 28 by the VSYS_SW 26 is stopped. Meanwhile, the power feed to the timer 36 is continued. Note that, in the case where the fourth state continues and the power storage amount of the EDLC 12 decreases to "0" or the amount corresponding to "0", the printing apparatus 10 transitions to the fifth state, the power feed to all constituent members of the power feed system is stopped, and the measurement value of the timer 36 is initialized (reset).

Then, in the case where the USB cable is connected to USB connector 24 in the fourth state and the fifth state, power is fed from the external power source to the charger 14 and the VSYS_SW 26. Moreover, the power feed from the external power source causes the VSYS_SW 26 to cancel the restriction of power feed to the DC-DC1 16, and power is thereby fed to the DC-DC1 16, the DC-DC2 18, and the main ASIC 28. In the case where the main ASIC 28 is fed with power and goes into the ON state, the main ASIC 28 refers to the measurement result of the timer 36.

Accordingly, the processing proceeds to S616 at a timing at which the main ASIC 28 is activated after the stop of power feed by the VSYS_SW 26 in S614, and the main ASIC 28 determines whether or not the measurement value of the timer 36 is initialized. In the case where the main ASIC 28 determines that the measurement value of the timer 36 is not initialized in S616, the main ASIC 28 determines that the main ASIC 28 has gone into the ON state in the fourth state in which the time measurement by the timer 36 is continued, and the processing returns to S606. The time measurement in the timer 36 is thereby continuously performed also after the process of S616. Meanwhile, in the case where the main ASIC 28 determines that the measurement value of the timer 36 is initialized in S616, the main ASIC 28 determines that the main ASIC 28 has gone into the ON state in the fifth state in which the timer 36 is stopped, assumes that a time equal to or longer than the predetermined time Tp has elapsed, and terminates this measurement processing. Note that, in the case where the maintenance operation is started during the measurement processing, the executed measurement processing is forcedly terminated.

<Determination Processing>

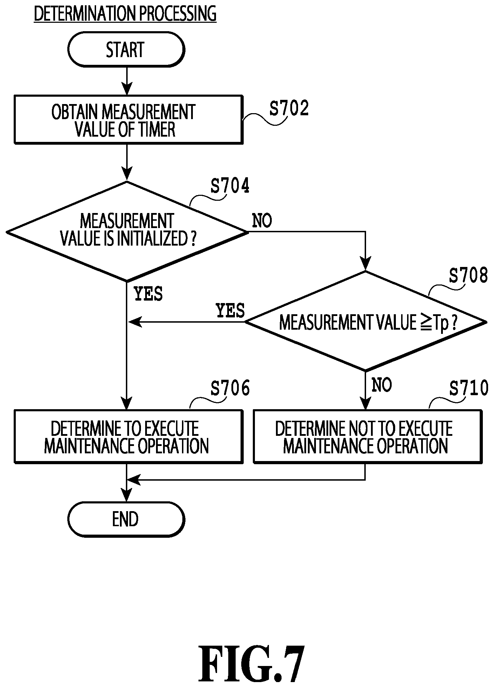

The printing apparatus 10 executes determination processing of determining execution of the maintenance operation based on the measurement result of the timer 36 at a predetermined timing such as at the moment of initialization processing on the predetermined constituent member of the printing mechanism. Then, in the printing apparatus 10, the maintenance operation by the maintenance portion 308 is executed based on a result of this determination processing. In this section, explanation is given of the determination processing of determining execution of the maintenance operation based on the measurement result of the timer 36. Fig. 7 is a flowchart illustrating detailed processing contents of the determination processing. The main ASIC 28 performs the series of processes illustrated in the flowchart of Fig. 7 by loading a program code stored in the flash ROM 32 onto the DDR 30 and executing the program code. Alternatively, all or part of functions of the steps in Fig. 7 may be executed by hardware such as another ASIC or an electric circuit.

In the case where the determination processing is started, first, in S702, the main ASIC 28 obtains the measurement value in the timer 36. Next, in S704, the main ASIC 28 determines whether or not the obtained measurement value is initialized (is "0"). In the case where the power feed to the timer 36 is stopped, the measurement value is initialized, and at this moment, the elapsed time from the latest maintenance operation has exceeded the predetermined time Tp. Accordingly, in the case where the main ASIC 28 determines that the measurement value is initialized in S704, the main ASIC 28 determines that the maintenance operation is necessary, and the processing proceeds to S706. In S706, the main ASIC 28 determines to execute the maintenance operation, and terminates this determination processing.

Meanwhile, in the case where the main ASIC 28 determines that the measurement value is not initialized in S704, the processing proceeds to S708, and the main ASIC 28 determines whether the measurement value is equal to or more than the predetermined time Tp. In the case where the main ASIC 28 determines that the measurement value is equal to or more than the predetermined time Tp in S708, the processing proceeds to S706. Meanwhile, in the case where the main ASIC 28 determines that the measurement value is less than the predetermined time Tp in S708, the processing proceeds to S710, and the main ASIC 28 determines not to perform the maintenance operation, and terminates this determination processing.

<Operations and Effects>

As explained above, in the printing apparatus 10 according to the present embodiment, if the power storage amount of the EDLC 12 falls below the predetermined amount Tm in the case where the power is OFF and no power is fed from the external power source, power feed to some of the configurations excluding the timer 36 is stopped. This can secure power that can be fed from the EDLC 12 to the timer 36, and allows the time measurement by the timer 36 to be executed for a time exceeding the predetermined time Tp that is the time interval at which the maintenance operation is executed, from the latest maintenance operation. Accordingly, in the printing apparatus 10, there is no need to provide a battery dedicated to the timer 36, and it is possible to achieve power feed to the timer 36 after the pull-out of the cable while suppressing a cost increase and securing functions for executing the maintenance operation.

(Second Embodiment)

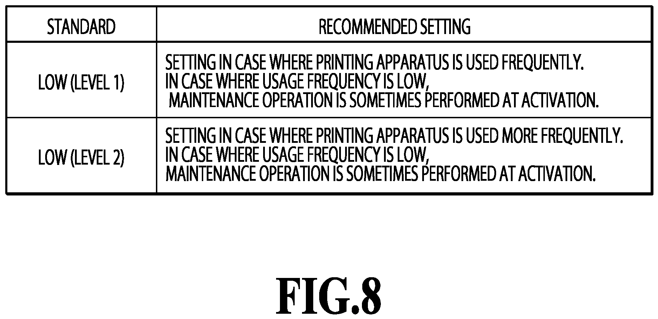

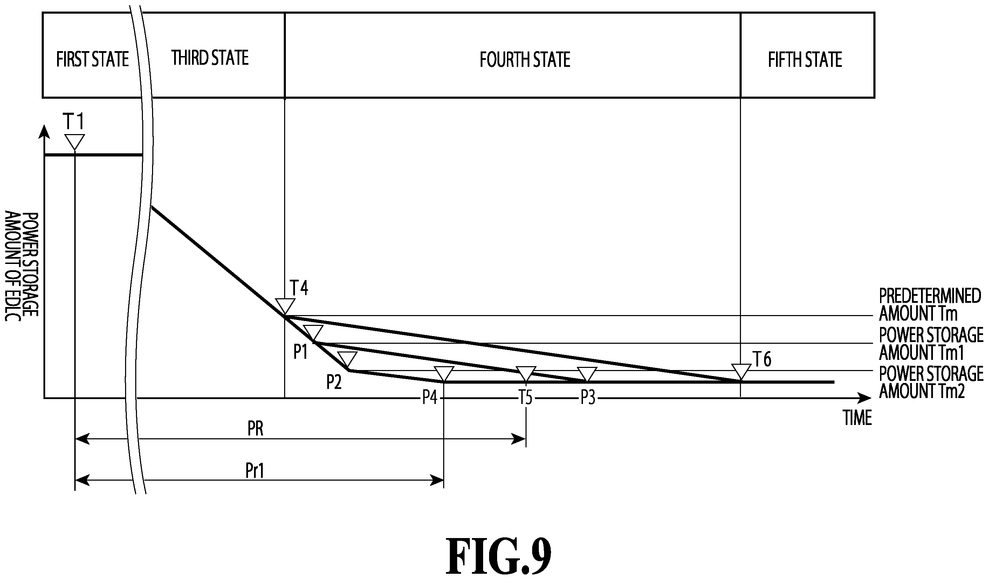

Next, a printing apparatus according to a second embodiment is explained with reference to Figs. 8 and 9. In the following explanation, the same reference numerals as those used in the first embodiment are used for configurations that are the same as or correspond to those in the printing apparatus according to the first embodiment described above, and detailed explanation of these configurations is omitted.

In the first embodiment described above, the power feed to the main ASIC 28 is stopped at the timing at which the power storage amount of the EDLC 12 falls below the predetermined amount to enable drive of the timer 36 for a time exceeding the predetermined time Tp from the latest maintenance operation. In the case where the printing apparatus goes into the fourth state in which the power feed to the main ASIC 28 is stopped, the printing apparatus 10 cannot be activated unless the USB cable is connected to reactivate the main ASIC 28 by the power feed from the external power source and the power key 34 is set to an operable state. For example, a user who frequently uses the printing apparatus 10 feels such specifications inconvenient. Accordingly, if it is possible to delay the timing of transition to the fourth state and maintain the state where the power key 34 is usable for a long period, usability for the user who frequently uses the printing apparatus is expected to be improved.

Accordingly, in the present embodiment, the timing at which the power feed to the main ASIC 28 is stopped, that is the timing of transition to the fourth state is made changeable depending on a usage frequency. Specifically, the power storage amount of the EDLC 12 to be the threshold in the transition from the third state to the fourth state is made changeable by user setting. Fig. 8 is a table illustrating contents of settings for changing the threshold. In the present embodiment, as illustrated in Fig. 8, three modes of "standard", "low (level 1)", and "low (level 2)" can be set. Note that the settable modes are not limited to three modes, and may be two or four or more modes.

In the case where the setting is "standard", the threshold is the predetermined amount Tm as in the first embodiment described above. Such setting is executed through, for example, a setting screen displayed on the display portion of the operation portion including the power key 34. Specifically, the main ASIC 28 displays the setting screen on the display portion, and performs setting based on an operation by the user on the operation portion such that the setting contents selected by the user is applied. As described above, in the present embodiment, the main ASIC 28 functions as a setting portion configured to set one mode from multiple modes. In the setting screen, there may be performed notification indicating that the "standard" setting is the recommended setting.

In the case where the setting is "low (level 1)", the threshold is dropped to a level lower than the predetermined amount Tm, and is set to a power storage amount Tm1. Dropping the threshold from the predetermined amount Tm to the power storage amount Tm1 allows the third state to be maintained for a long period. Accordingly, in the case where the setting is "low (level 1)", a time in which the main ASIC 28 is active is longer than that in the case where the setting is "standard", and the state where the power key 34 is usable can be maintained for a long period. Moreover, in the setting screen, there may be performed notification indicating that the setting of "low (level 1)" is a setting suitable for high-frequency usage and notification indicating that the maintenance operation is sometime executed at activation in the case where the usage frequency is low.

In the case where the setting is "low (level 2)", the threshold is dropped to a level lower than the predetermined amount Tm and the power storage amount Tm1, and is set to a power storage amount Tm2. Dropping the threshold from the predetermined amount Tm to the power storage amount Tm2 allows the third state to be maintained for a longer period than in the case where the setting is set to "standard" or "low (level 1)". Accordingly, in the case where the setting is "low (level 2)", a time in which the main ASIC 28 is active is longer than those in the cases where the other two settings are set, and the state where the power key 34 is usable can be maintained for a long period. Moreover, in the setting screen, there may be performed notification indicating that the setting of "low (level 2)" is a setting suitable for even higher-frequency usage and notification indicating that the maintenance operation is sometimes executed at activation in the case where the usage frequency is low.

Note that, in the case where "low (level 1)" or "low (level 2)" is set, the threshold used in S612 of the measurement processing is set to the power storage amount Tm1 or the power storage amount Tm2, and the other processes are the same as those in the case where "standard" is set (that is, as in the above explanation of the first embodiment). Moreover, the determination processing is also the same as that in the case where "standard" is set.

Next, a change in the power storage amount of the EDLC 12 over time depending on the above-mentioned settings is explained. Fig. 9 is a diagram illustrating the change in the power storage amount of the EDLC 12 over time depending on the settings. Since the change in the case where the setting is "standard" is the same that in the contents explained in the first embodiment described above, explanation for "standard" is omitted.

In the case where the setting is "low (level 1)", the power storage amount Tm1 to be the threshold in the transition from the third state to the fourth state is smaller than the predetermined amount Tm. Accordingly, the timing of transition from the third state to the fourth state, that is the timing at which the power feed is stopped and the main ASIC 28 goes into the OFF state is the point P1 later than the point T4 corresponding to the predetermined amount Tm. Thus, in the case where "low (level 1)" is set, the timing of transition from the third state to the fourth state is delayed from that in the case where "standard" is set, the ON state of the main ASIC 28 continues for a longer period, and the state where the power key 34 is usable is maintained for a longer period.

Moreover, in the case where the setting is "low (level 2)", the power storage amount Tm2 to be the threshold in the transition from the third state to the fourth state is smaller than the predetermined amount Tm, and is even smaller than the power storage amount Tm1 smaller than the predetermined amount Tm. Accordingly, the timing of transition from the third state to the fourth state is the point P2 later than the point T4 corresponding to the predetermined amount Tm and the point P1 corresponding to the power storage amount Tm1. Thus, the timing of transition from the third state to the fourth state is further delayed from those in the cases where "standard" and "low (level 1)" are set, the ON state of the main ASIC 28 continues for a longer period, and the state where the power key 34 is usable is maintained for a longer period.

Note that the power consumption per unit time in the fourth state in the case where the setting is "low (level 1)" or "low (level 2)" is also the same as that in the case where the setting is "standard". Accordingly, a timing at which the power storage amount of the EDLC 12 reaches "0" or the value corresponding to "0" is the point P3 ("low (level 1)") or the point P4 ("low (level 2)") that is earlier than the point T6 in the case where "standard" is set, by an amount corresponding to the delay of the timing of transition to the fourth state. In other words, an operation time of the timer 36 in the case where "low

(level 1)" is set shorter that in the case where "standard is set", and the operation time in the case where "low (level 2)" is set is even shorter.

Accordingly, in the case where "low (level 2)" is set, the timer 36 measures time only in the period Pr1 from the point T1 to the point P4. The period Pr1 is shorter than the period PR from the point T1 to the point T5 that is the predetermined time Tp. Accordingly, in the case where "low (level 2)" is set, a period in which the count of the timer 36 is terminated includes a timing at which the elapsed time has not reached the predetermined time Tp. Accordingly, there may occur a case where the maintenance operation is not executed at an appropriate timing. However, since the user who sets "low (level 2)" is assumed to frequently use the printing apparatus 10, the printing apparatus 10 is expected to be used during the operation of the timer 36, and execution of the maintenance operation at an inappropriate timing is suppressed.

<Operations and Effects>

As explained above, in the printing apparatus 10 according to the present embodiment, the user can change the threshold in the transition from the third state to the fourth state depending on the usage frequency of the printing apparatus 10. Accordingly, in the present embodiment, a long power feed time to the main ASIC 28 can be secured in addition to the operations and effects of the first embodiment, and a long usable time of the power key 34 connected to the main ASIC 28 can be secured. This improves usability for the user who frequently uses the printing apparatus 10.

(Other Embodiments)

Note that the above-mentioned embodiments may be modified as described in (1) to (6) described below.

(1) Although the threshold in the transition from the third state to the fourth state in each selectable setting is set to be smaller than that in the case where "standard" is set in the second embodiment described above, the present disclosure is not limited to this. The threshold in the selectable setting may be set to be larger than that in the case where "standard" is set. This enables handling of a setting in which functions other than the timer 36 are used in parallel with the timer 36 in the fourth state.

(2) Although not particularly described in the above embodiments, the printing apparatus 10 determines that the USB cable is pulled out in the case where feeding of the power source voltage VBUS to the charger 14 is stopped. The printing apparatus 10 may include a configuration that detects pull-out of the USB cable from the USB connector, and determine whether or not the USB cable is pulled out based on a detection result of this configuration.

(3) Although the printing apparatus 10 is a so-called serial scan type printing apparatus that uses the printing head configured to eject the inks while moving in the direction intersecting the conveyance direction of the print medium in the above embodiments, the present disclosure is not limited to this. The printing apparatus 10 may be a so-called full-line type printing apparatus that uses a long printing head extending over a whole region, in the width direction, of a printing region in the print medium.

(4) Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

(5) Although the power feed to the main ASIC 28 and the like is stopped by the restriction by the VSYS_SW 26 in the above embodiments, the power feed to the main ASIC 28, the motor driver 20, and the head driver 22 may be individually stopped. Moreover, the stop of power feed may be performed on a display panel and a wireless communication unit.

(6) The above embodiments and the various forms described above in (1) to (5) may be combined as appropriate.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A printing apparatus (10) configured to perform printing on a print medium by using a printing unit, the printing apparatus comprising:

   a power storage unit (12) capable of storing power fed from an external power source connected via a USB cable;
   a measurement unit (36) capable of measuring time based on power from the power storage unit;
   a control unit (28) configured to execute predetermined processing based on a measurement result of the measurement unit; and
   a restriction unit (26) capable of restricting power fed from the power storage unit, wherein in a period in which power feed from the external power source is stopped,

   the restriction unit restricts feeding of power to units other than at least the measurement unit depending on a power storage amount of the power storage unit, and
   the measurement unit continues the measurement.

2. The printing apparatus according to claim 1, wherein, in a case where the power storage amount of the power storage unit falls below a predetermined value, the control unit controls the restriction unit such that power feed to the control unit is restricted.

3. The printing apparatus according to claim 1 or 2, wherein, in a case where the printing apparatus receives the power feed from the external power source after restriction of power feed to the control unit, the restriction unit cancels the restriction.

4. The printing apparatus according to any one of claims 1 to 3, wherein the measurement unit initializes a measurement value in a case where power feed to the measurement unit is stopped.

5. The printing apparatus according to claim 2, further comprising a maintenance unit capable of executing a maintenance operation for maintaining and recovering an ejection performance of ink on the printing unit configured to perform printing on the print medium by ejecting the ink, wherein
the control unit determines execution of the maintenance operation based on the measurement result in the measurement unit.

6. The printing apparatus according to claim 5, wherein the predetermined value is set such that an elapsed time from the latest maintenance operation reaches or exceeds a predetermined time before the power storage amount of the power storage unit after the stop of power feed from the external power source reaches an amount at which the measurement unit is undrivable, the predetermined time being a time interval at which the maintenance operation is executed.

7. The printing apparatus according to any one of claims 2, 5, 6, further comprising a setting unit capable of setting one mode from a plurality of modes varying from each other in the power storage amount of the power storage unit to be a threshold for executing the restriction by the restriction unit.

8. The printing apparatus according to claim 7, wherein the plurality of modes include a mode in which the threshold is the predetermine value and a mode in which the threshold is smaller than the predetermined value.

9. The printing apparatus according to claim 5 or 6, wherein, in a case where the maintenance operation is completed, the control unit causes the measurement unit to initialize a measurement value and then start the measurement of time.

10. The printing apparatus according to any one of claims 5, 6, 9, wherein the maintenance unit

    includes a cap portion configured to cap a surface of the printing unit on which a nozzle for ejecting the ink is formed, and
    causes the cap portion to cap the printing unit not executing printing.

11. The printing apparatus according to any one of claims 5, 6, 9, 10, wherein, in a case where a measurement value of the measurement unit is equal to or more than a predetermined time at a predetermined timing, the control unit determines to execute the maintenance operation, the predetermined time being a time interval at which the maintenance operation is executed.

12. The printing apparatus according to any one of claims 5, 6, 9, 10, wherein

    the measurement unit initializes a measurement value in a case where power feed to the measurement unit is stopped, and
the control unit executes the maintenance operation in a case where the measurement value of the measurement unit is initialized at a predetermined timing.

13. The printing apparatus according to claim 11 or 12, wherein the predetermined timing includes a moment of initialization processing of a constituent member of the printing apparatus or a moment of a preparation operation after job input.

14. The printing apparatus according to any one of claims 1 to 13, further comprising a connection unit to and from which the USB cable connected to the external power source is capable of being plugged in and pulled out and that is connectable to the external power source via the USB cable, wherein

    the power feed from the external power source is performed in a case where the USB cable is plugged into the connection unit, and
    the power feed from the external power source is stopped in a case where the USB cable is pulled out from the connection unit.

15. A control method of a printing apparatus that includes a measurement unit capable of measuring time by using power fed from a power storage unit capable of storing power fed from an external power source connected via a USB cable and that operates to execute predetermined processing based on a measurement result of the measurement unit, the control method comprising:
    prioritizing power feed to the measurement unit depending on a power storage amount of the power storage unit in a case where power feed from the external power source is stopped.

FIG.1

EP 4 563 364 A1

FIG.2

EP 4 563 364 A1

**FIG.3**

## FIG.4A

USB CONNECTOR *24* → Charger *14* → VSYS SW *26* → DC-DC1 ON *16* → DC-DC2 ON *18* → Main ASIC Running *28* ← PowerKey *34*, Timer *36*

EDLC *12*

## FIG.4B

USB CONNECTOR *24* → Charger *14* → VSYS SW *26* → DC-DC1 ON *16* → DC-DC2 ON *18* → Main ASIC Standby *28* ← PowerKey *34*, Timer *36*

EDLC *12*

## FIG.4C

USB CONNECTOR *24* → Charger *14* → VSYS SW *26* → DC-DC1 ON *16* → DC-DC2 ON *18* → Main ASIC Standby *28* ← PowerKey *34*, Timer *36*

EDLC *12*

## FIG.4D

*406* *404*

USB CONNECTOR *24* → Charger *14* → VSYS SW *26* → DC-DC1 OFF *16* → DC-DC2 OFF *18* → Main ASIC OFF *28* ← PowerKey *34*, Timer *36*

EDLC *12* *402*

## FIG.4E

*406*

USB CONNECTOR *24* → Charger *14* → VSYS SW *26* → DC-DC1 OFF *16* → DC-DC2 OFF *18* → Main ASIC OFF *28* ← PowerKey *34*, Timer *36*

EDLC *12*

FIG.5

EP 4 563 364 A1

MEASUREMENT PROCESSING

```
        ( START )
            │
            ▼
  ┌──────────────────────────┐
  │ INITIALIZE MEASUREMENT VALUE │  S602
  └──────────────────────────┘
            │
            ▼
  ┌──────────────────────────┐
  │   START TIME MEASUREMENT   │  S604
  └──────────────────────────┘
            │
            ▼
        ◇ STANDBY STATE ? ◇ ──NO──►    S606
            │
           YES
            │
            ▼
        ◇ POWER IS FED FROM EXTERNAL
          POWER SOURCE ? ◇ ──YES──►    S608
            │
           NO
            │
            ▼
  ┌──────────────────────────┐
  │   OBTAIN POWER
      STORAGE AMOUNT OF EDLC   │  S610
  └──────────────────────────┘
            │
            ▼
        ◇ POWER STORAGE AMOUNT ≧ Tm ? ◇ ──YES──►   S612
            │
           NO
            │
            ▼
  ┌──────────────────────────┐
  │       STOP VSYS_SW         │  S614
  └──────────────────────────┘
            │
            ▼
   NO◄── ◇ MEASUREMENT
          VALUE IS INITIALIZED ? ◇      S616
            │
           YES
            │
            ▼
         ( END )
```

**FIG.6**

DETERMINATION PROCESSING

START

OBTAIN MEASUREMENT
VALUE OF TIMER — S702

MEASUREMENT
VALUE IS INITIALIZED ? — S704

NO

YES

MEASUREMENT VALUE ≧ Tp ? — S708

YES

NO

DETERMINE TO EXECUTE
MAINTENANCE OPERATION — S706

DETERMINE NOT TO EXECUTE
MAINTENANCE OPERATION — S710

END

# FIG.7

| STANDARD | RECOMMENDED SETTING |
|---|---|
| LOW (LEVEL 1) | SETTING IN CASE WHERE PRINTING APPARATUS IS USED FREQUENTLY. IN CASE WHERE USAGE FREQUENCY IS LOW, MAINTENANCE OPERATION IS SOMETIMES PERFORMED AT ACTIVATION. |
| LOW (LEVEL 2) | SETTING IN CASE WHERE PRINTING APPARATUS IS USED MORE FREQUENTLY. IN CASE WHERE USAGE FREQUENCY IS LOW, MAINTENANCE OPERATION IS SOMETIMES PERFORMED AT ACTIVATION. |

# FIG.8

**FIG.9**

# EP 4 563 364 A1

**Europäisches Patentamt**
**European Patent Office**
**Office européen des brevets**

## EUROPEAN SEARCH REPORT

**Application Number**

EP 24 21 5378

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/155918 A1 (SHIMAMURA YOSHIYUKI [JP]) 12 August 2004 (2004-08-12) * paragraphs [0001], [0034], [0048]; figures 1-6 * | 1-15 | INV. B41J29/393 B41J2/165 B41J23/00 |
| A | EP 3 251 866 A1 (CANON KK [JP]) 6 December 2017 (2017-12-06) * the whole document * | 1-15 | |

**TECHNICAL FIELDS SEARCHED (IPC)**

B41J

The present search report has been drawn up for all claims

| Place of search | Date of completion of the search | Examiner |
|---|---|---|
| The Hague | 31 January 2025 | Cavia Del Olmo, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 21 5378

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | Publication date |
|---|---|---|---|
| US 2004155918 A1 | 12-08-2004 | CN 1519121 A | 11-08-2004 |
| | | EP 1442888 A2 | 04-08-2004 |
| | | JP 2004230814 A | 19-08-2004 |
| | | US 2004155918 A1 | 12-08-2004 |
| EP 3251866 A1 | 06-12-2017 | CN 107399173 A | 28-11-2017 |
| | | EP 3251866 A1 | 06-12-2017 |
| | | JP 6914008 B2 | 04-08-2021 |
| | | JP 2017205945 A | 24-11-2017 |
| | | KR 20170130309 A | 28-11-2017 |
| | | US 2017334226 A1 | 23-11-2017 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017205945 A